# EUROPEAN PATENT SPECIFICATION

(11) **EP 1 832 081 B1**
(45) Date of publication and mention of the grant of the patent: **30.09.2009**
(21) Application number: 05818184.3
(22) Date of filing: 01.12.2005
(51) Int. Cl.: H04L 29/06

(54) **METHOD AND DEVICE FOR SETTING A ROUTE FOR COMMUNICATION CONNECTION**
VERFAHREN UND VORRICHTUNG ZUM FESTSTELLEN EINER ROUTE FÜR EINE KOMMUNIKATIONSVERBINDUNG
PROCEDE ET DISPOSITIF DE DETERMINATION D'UNE ROUTE POUR UNE CONNEXION DE COMMUNICATION

(30) Priority: 28.12.2004 EP 04030890; 25.05.2005 US 136501
(43) Date of publication of application: 12.09.2007
(73) Proprietor: Nokia Corporation, 02150 Espoo (FI)
(72) Inventor: KARHU, Mika, 33950 Pirkkala (FI)
(74) Representative: TBK-Patent
(86) International application number: PCT/IB2005/003626
(87) International publication number: WO 2006/070231

(56) References cited:
- US-A1- 2004 246 931
- OIWA T ET AL: "A network mobility protocol based on LIN6" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1984-1988, XP010701427 ISBN: 0-7803-7954-3
- NG PANASONIC SINGAPORE LABS P THUBERT CISCO SYSTEMS H OHNISHI NTT E PAIK KT C: "Taxonomy of Route Optimization models in the NEMO Context; draft-thubert-nemo-ro-taxonomy-03.txt;" IETF STANDARD-WORKING-DRAFT, INTERNET ENGINEERING TASK FORCE, IETF, CH, no. 3, 25 October 2004 (2004-10-25), XP015036134 ISSN: 0000-0004
- VIJAY DEVARAPALLI NOKIA RYUJI WAKIKAWA KEIO UNIVERSITY ALEXANDRU PETRESCU MOTOROLA PASCAL THUBERT CISCO SYSTEMS: "Network Mobility (NEMO) Basic Support Protocol; draft-ietf-nemo-basic-support-03.txt;" IETF STANDARD-WORKING-DRAFT, INTERNET ENGINEERING TASK FORCE, IETF, CH, vol. nemo, no. 3, June 2004 (2004-06), XP015024105 ISSN: 0000-0004 cited in the application

## Description

### BACKGROUND OF THE INVENTION

### Field of the invention

The present invention relates to a method of setting a route for a communication connection of a communication unit in a mobile network environment, a corresponding communication system, a routing device and a mobile node.

### Background of the invention

In particular, the present invention relates to the field of route optimization of communication units in mobile networks providing network mobility. More specifically, the present invention is directed to a mechanism which allows an optimized route setting, in a foreign (visited) network, for a mobile node connecting to any mobile router (i.e. a mobile router belonging to a same or a foreign home network as the mobile node).

Recently, an increasingly extension of communication networks, e.g. of wire based communication networks, such as the Integrated Services Digital Network (ISDN), or wireless communication networks, such as the cdma2000 (code division multiple access) system, cellular 3^{rd} generation communication networks like the Universal Mobile Telecommunications System (UMTS), the General Packet Radio System (GPRS), or other wireless communication system, such as the Wireless Local Area Network (WLAN), took place all over the world. Various organizations, such as the 3^{rd} Generation Partnership Project (3GPP), the International Telecommunication Union (ITU), 3^{rd} Generation Partnership Project 2 (3GPP2), Internet Engineering Task Force (IETF), and the like are working on standards for telecommunication network and multiple access environments.

Communication units may comprise different devices, for example, a mobile node, such as a mobile station, a mobile phone, a personal computer (PC), a laptop, a personal digital assistant (PDA) or the like.

When a communication connection for a communication unit (e.g. to a correspondent node (CN)) is to be established via the Internet, Internet Protocol (IP) is used for the data transfer and the connection establishment. One (current) version of IP is IPv6.

One technical field, which is currently of interest, in particular in connection with IP based communication, is the provision of mobile networks providing network mobility (NEMO). Mobile networks can be established, for example, in vehicles like a car, bus, subway train, airplane and the like. For connecting to a communication unit, such mobile networks provide a routing network element or router, such as a mobile router (MR) or multi-link subnet router (MSR), which enables to connect to a communication network, such as the Internet. A mobile router may be capable to provide the capability of routing between its point of attachment and a subnet, which moves with the mobile router. The purpose of network mobility is to enable the mobile network to attach to different points in the Internet and to guarantee the continuity of sessions of fixed nodes or mobile nodes (MN) within the mobile networks. Therefore, it is necessary that the current location (or address) of the communication unit is known in the network.

The routing network element of the mobile network is connected to the communication network, such as the Internet, via an access router (AR).

For the connection to a router, such as a routing network element or access router, there are provided respective transceivers and interfaces, such as a radio air interface, infrared interface or the like, in the connecting device.

Since the mobile network itself (and thus the routing network element) can be moved there is a situation where the coverage area of a home network is left and that of a foreign or visited network is entered. Then, the routing network element is connecting to an access router of an operator's network of the visited network for providing access to the communication network, i.e. the Internet.

Generally, for forwarding data correctly to and from the (mobile) communication unit, it is necessary to know where the user equipment is actually located, i.e. the address of the communication unit. An IPv6 address may comprise a network prefix advertised by the router to which the communication unit is connecting. The prefix information is normally transmitted by the router by means of a Router Advertisement message which is periodically sent or in response to a Router Solicitation message sent by the communication unit. In addition, the Ipv6 address may also include a Link Layer Address part, LLA, which is an interface identifier to enable forwarding of packets within a subnet prefix in IP networks. The subnet or last hop networks can utilize any access medium technology with LLA serving as a unique link identifier in an access network for the last hop router to uniquely identify the node for forwarding the packet.

The address information, i.e. the network prefix, for generating the Ipv6 address of the communication unit is provided from a respective routing network element to which the communication unit is connecting, an access router and the like. Such derived address is registered, for example, in a home agent (HA) of the communication unit's home network.

When the mobile communication unit is moved to another cell or the like (i.e. to the coverage area of another router or access router) it receives a new temporarily address which is called the Care-of-Address (CoA). The CoA is an IP address by which a mobile communication unit is identified in the network. CoA can be configured in a stateless way by combining the network prefix advertised by the routing network element and appending a 64-bit LLA. CoA is a globally routable address i.e. CoA can be used for mobility binding to the home network (i.e. the HA) of the communication unit and other correspondent nodes to declare the exact location of the mobile terminal. When the terminal moves from one routing network element to another, the CoA changes.

When the communication unit has the new CoA, it performs a so-called binding procedure, e.g. a Mobile IPv6 binding update, with its HA. By means of this procedure the CoA is mapped to the "permanent" address or Home Address (HoA) of the communication unit so as to ensure the reachability of the communication unit also in a visited network. When data is to be transmitted to the communication unit, the HA acts as a forwarding element to the communication unit, i.e. it tunnels data to the communication unit's CoA by a bi-directional tunnel.

Further details regarding mobility in IPv6 are described, for example, in IETF Request for Comments (RFC) 3775, Mobility Support in IPv6, D. Johnson et al., June 2004, and RFC 2461, Neighbor Discovery in IPv6, T. Narten at al., December 1998.

For providing the address information, i.e. the prefix, needed to derive the CoA, there are currently proposed two mechanisms in IPv6 environment related to a mobile network for preparing and forwarding the prefix in a routing network element.

The first mechanism is referred to as prefix delegation which is based, for example, on the mechanisms described in IETF Internet drafts draft-ietf-nemo-basic-support-03.txt, Vijay Devarapalli et al., June 2004, draft-jeong-nemo-ro-ndproxy-02.txt, J.P. Jeong et al., February 2004, and draft paakkonen-nemo-prefix-delegation-00. txt, Pekka Paakkonen, March 2003.

Generally, according to prefix delegation, when the routing network element is located in a foreign (visited) network, it sets up a bi-directional tunnel to it's home network and request a prefix from the home agent (HA) to its nodes. This tunnel is set up when the routing network element sends a successful Binding Update to its HA, informing the HA of its current point of attachment. The HA provides the routing network element with an address information (prefix) from its home network, which is to be used (advertised) in the subnet of the routing network element (MR, MSR). Then the routing network element advertises the given prefix to communication units connecting thereto and forwards all packets between connected communication units and bi-directional tunnel. In other words, all traffic between the communication unit in the routing network element's mobile network and a CN passes through the HA of the routing network element.

The second mechanism is referred to as prefix forwarding which is based, for example, on the IETF Internet draft draft-ietf-ipv6-multilink-subnets-00.txt, Dave Thaler et al., June 2002.

According to prefix forwarding, a multilink subnet is defined as a collection of independent links, connected by routers, but sharing a common subnet prefix. A routing network element of a mobile network connects to an access router of a visited network or to another (mobile) router which is connected to the access router of the visited network and receives a prefix from the access router (i.e. a prefix related to the visited network). The routing network element forwards (advertises) the same prefix that it has got from previous router, e.g. the access router. In other words, when a communication unit connects to the routing network element, the previously received AR (or MR) prefix is forwarded as address information to the communication unit. The communication unit executes a binding procedure with its home network (i.e. the HA) by itself.

However, when one of these two mechanisms is implemented for route setting in the mobile network, there may arise the following problems.

In case of prefix delegation, if every mobile router creates a bi-directional tunnel to its HA and the HA delegates prefix to mobile router for the communication units connecting thereto, the routing network elements in a second level of a mobile hierarchy would have bi-directional tunnel within the first level router's bi-directional tunnel. If more hierarchy levels of router exits, there are even more bi-directional tunnels nested in each other. Such a situation creates an extreme overhead. Additionally, all packets of the mobile router (and the communication units connected thereto) located in the second level of mobile hierarchy passed the first level routers home network even in the case that the lower level devices belong to another home network.

On the other hand, regarding the usage of the prefix forwarding mechanism, if all mobile routers forward only the prefix from the previous AR/MR to the communication units connecting thereto, any change in a first level of mobile hierarchy would cause the change of all care-of-addresses of devices in whole mobile hierarchy. This would result in a high processing and signalling load. Furthermore, every communication unit has to bind itself to the HA even in the case that the communication units / mobile routers on top of each other in the mobile hierarchy belong to the same home network, i.e. have the same HA. Also this results in a high signalling load in the communication system, e.g. by binding updates, when the network changes.

An example of a prior art mobile routing method is known from document US2004/246931.

### SUMMARY OF THE INVENTION

Thus, it is an object of the invention to provide an improved mechanism for setting a route for a communication connection of a communication unit in a mobile network environment. In particular, it is an object of the present invention to optimize the route of a communication connection of a mobile node connecting to a routing network element, such as a mobile router or multi-link subnet router, in a visited network

This object is achieved by the measures defined in the attached claims.

In particular, according to one aspect of the proposed solution, there is provided, for example, a method of setting a route for a communication connection of a communication unit in a mobile network environment, the method comprising steps of connecting the communication unit to a routing network element, determining, in the routing network element, whether or not the communication unit belongs to the same home network as the routing network element, selecting, if it is determined that the communication unit belongs to the same home network as the routing network element, a first type of address information, or selecting, if it is determined that the communication unit belongs not to the same home network as the routing network element, a second type of address information, sending the address information from the routing network element to the communication unit, and using the address information received from the routing network element in the sending step for setting a route for the communication unit.

Furthermore, according to one aspect of the proposed solution, there is provided, for example, a communication system usable a mobile network environment comprising at least one routing network element and at least one communication unit, the system being adapted to set a route for a communication connection of a communication unit in mobile network environment, wherein the routing network element is adapted to detect that the communication unit connects to the routing network element, to determine whether or not the communication unit belongs to the same home network as the routing network element, to select, if it is determined that the communication unit belongs to the same home network as the routing network element, a first type of address information, or to select, if it is determined that the communication unit belongs not to the same home network as the routing network element, a second type of address information, and to send the address information to the communication unit, and the communication unit is adapted to process the address information received from the routing network element and
to use the address information for setting a route for the communication unit.

Moreover, according to one aspect of the proposed solution, there is provided, for example, a routing device usable a mobile network environment and employed in a setting of a route for a communication connection of a communication unit in mobile network environment, wherein the routing device comprises: detecting means for detecting that the communication unit connects to the routing device, determining means for determining whether or not the communication unit belongs to the same home network as the routing device, selecting means for selecting, if it is determined that the communication unit belongs to the same home network as the routing device, a first type of address information, or for selecting, if it is determined that the communication unit belongs not to the same home network as the device, a second type of address information, and sending means for sending the address information to the communication unit.

Additionally, according to one further aspect of the proposed solution, there is provided, for example, a mobile node connectable to a mobile communication network, the mobile node comprising transmitting means for transmitting a request message for requesting an establishment of a communication connection to a routing network element of the mobile communication network, wherein the mobile node is adapted to introduce a specific data field comprising address information related to the mobile node's home network in the request message, the data field being introduced in such a way that it is usable in a route setting procedure performed by the routing network element.

Furthermore, according to one further aspect of the proposed solution, there is provided, for example, a mobile node connectable to a mobile communication network, wherein the mobile node comprises receiving means adapted to receive, from a routing network element, at least one of a first type and a second type of address information; setting means adapted to set up a route for a communication connection on the basis of the received address information; wherein the mobile node further comprises
selecting means for selecting, when both the first type and the second type of address information are received, one of the received first and second types for the route setting.

According to further refinements, the proposed solution may comprise one or more of the following features:
- the determination may comprise an identification of link layer address information transmitted from the communication unit to the routing network element when a link layer connection is established, and a comparison of the transmitted link layer address information with stored link layer address information of communication units known as belonging to the home network of the routeing network element;
- the determination may comprise an execution of an authentication procedure for proving that the communication unit belongs to the same home network as the routing network element;
- the determination may comprise a receipt of a router solicitation message from the communication unit comprising a data field indicating a source link layer address information, and a comparison of the indicated source link layer address information with stored link layer address information of communication units known as belonging to the home network of the routing network element;
- the determination may comprise a receipt of a router solicitation message from the communication unit comprising a data field indicating a home agent address information of the communication unit's home network, and a comparison of the indicated home agent address information of the communication unit with a home agent address information of the routing network element;
- the sending may comprise the sending of a router advertisement message from the routing network element to the communication unit, the router advertisement message including the address information;
- the sending may comprise a sending of, when the first type of address information is selected, in addition the second type of address information, and when the second type of address information is selected, in addition the first type of address information. Then, the communication unit may select one of the first and second types of address information received from the routing network element to be used for setting a route for the communication unit;
- the first type of address information may be related to the home network of the routing network element and may comprise a prefix received from a home agent located in the home network of the routing network element, while the second type of address information may be related to a visited network being different to the home network of the routing network element and may comprise a prefix received from a router connected to the visited network wherein the routing network element and the router are connected with each other;
- the communication unit and the routing network element may be respective mobile nodes movable in the mobile network environment, and the routing network element may comprise at least one of a mobile router and a multi link subnet router;
- the communication unit may comprise another routing network element;
- the mobile network environment may use a type of Internet protocol, in particular IPv6;
- for the communication connection of the communication unit, a bi-directional connection established between the routing network element and the home network may be used when the communication unit and the routing network element belong to the same home network, while a bi-directional connection between the communication unit and the home network may be established when the communication unit does not belong to the same home network as the routing network element.

According to further refinements concerning the defined mobile node, the proposed solution may comprise one or more of the following features:
- the mobile node may be adapted to introduce the specific data field in a router solicitation message,
wherein specific data field may comprise a source link layer address information or a home agent address information.

By virtue of the proposed solutions, the following advantages can be achieved:
- When using bi-directional tunnels for the communication connection of a communication unit, the packet overhead can be minimized. Furthermore, since a prefix delegation procedure is not performed in cases where it is more suitable to use a prefix forwarding procedure, signaling and processing load in the system can be reduced.
- The accessibility of communication units (mobile nodes) belonging to the same home network as the routing network element (mobile router, multi-link subnet router) is kept high by enabling to execute route setting using the prefix delegation while for the mobile nodes not belonging to the same home network as the routing network element another handling is selected, i.e. a route setting using the prefix forwarding is used.
- Configuration time in the system, in particular the routing network element (mobile router, multi-link subnet router) can be saved as there is no need for the routing network element to request a subnet prefix from its home network if only communication units (mobile nodes) belonging to home networks being different to that of the routing network element connecting to the routing network element.
- It is not necessary that a mobile node, having a home agent in another network than that of the routing network element, receives the address information related to the home network of the routing network element (i.e. home agent prefix of routing network element's home agent). Thus, it is not necessary to establish a route for the mobile node through the home agent of the routing network element.
- Less packet overhead can be achieved since it is not necessary to create a bi-directional tunnel for the mobile node inside the bi-directional tunnel of the routing network element to its home agent when the mobile node belongs not to the same home network as the routing network element.
- The packet processing in the system can be simplified as the routing network element routes packets based on a subnet prefix, i.e. packets having the access router (visited network) prefix are routed to the access router and packets having the home network prefix are routed to the bi-directional tunnel to the home agent.
- The flexibility of the system, in particular of the routing network element (mobile router, multi-link subnet router) can be enhanced. The routing network element has the possibility to choose whether or not to support mobile nodes which do not belong to the same home network by disabling/enabling multi-link subnet support and prefix forwarding. Thus, it is possible to avoid that the address information related to the home network of the routing network element (i.e. the home agent prefix of the routing network element) is transmitted automatically to connecting mobile nodes but only in case the routing network element decides to support the designated mobile node.
- Due to the separation of the connecting mobile nodes into nodes belonging to the same home network or not it is possible to enhance security policy separations between mobile nodes belonging to this home network and other mobile nodes.
- When the connecting mobile node is belonging to the same home network as the routing network element, the mobile node can receive in addition to the first type of address information, also the second type of address information, i.e. the access router prefix (visited network) and the home network prefix, from the routing network element. In other words, the routing network element may add, as an option, the second type of address information to the message comprising already the first type of address information, i.e. it may add the access router prefix as a further option to the message containing the home network prefix. Thus, the mobile node may have the possibility to decide on the desired route itself, i.e. via the access router or the home agent of the routing network element.

The above and still further objects, features and advantages of the invention will become more apparent upon referring to the description and the accompanying drawings.

### BRIEF DESCRIPTION OF THE DRAWINGS

Fig. 1 illustrates an overall situation in a communication system implementing the present invention.

Fig. 2 shows a flow chart showing a route setting procedure according to an embodiment of the present invention.

Fig. 3 shows a block diagram showing a part of the structure of a routing device according to an embodiment of the present invention.

Figs. 4 to 7 illustrate a respective communication connection situation in a simplified depicted communication system of Fig. 1.

Fig. 8 shows data formats used for transmitting address information according to examples in an embodiment of the present invention.

### DESCRIPTION OF PREFERRED EMBODIMENTS

In the following, embodiments of the present invention are described with reference to the drawings.

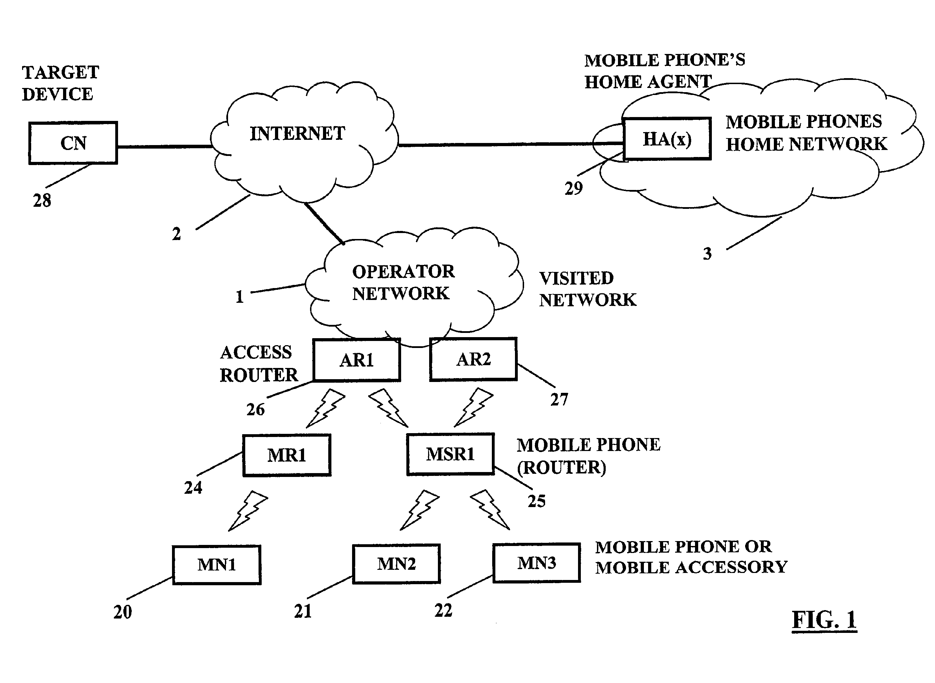

In Fig. 1, a general overview of a communication system is shown in which the present invention is applicable.

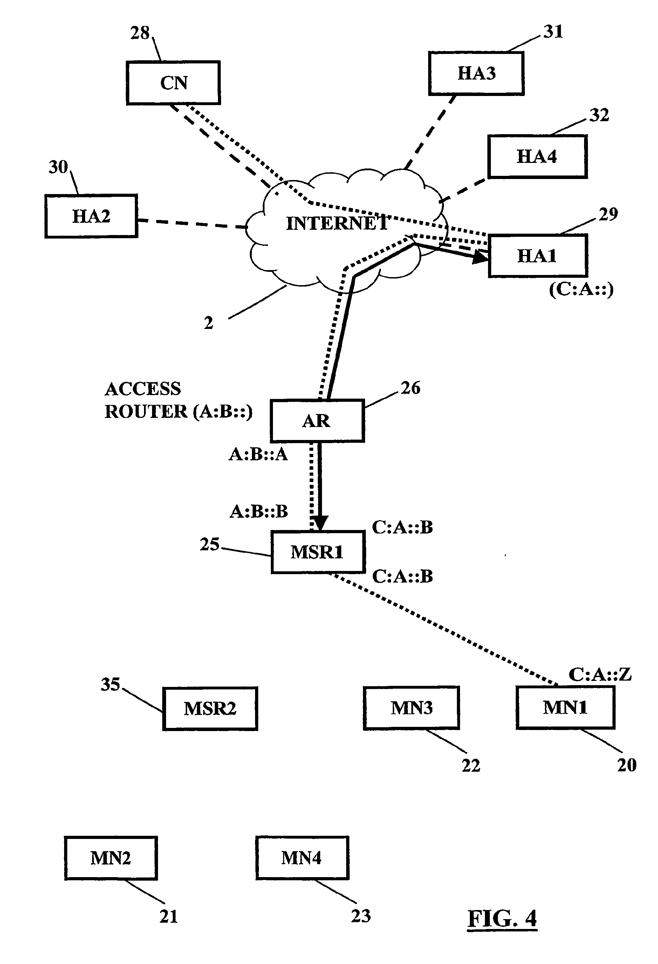

It is to be noted that the structure according to Fig. 1 (as well as that of Figs. 4 to 7 described later) represents only a simplified architecture of a mobile network environment. As known by those skilled in the art, there are provided several additional network elements and signaling links used for a communication connection.

However, for the sake of simplicity, only those elements are depicted which are necessary for understanding.

Furthermore, the network elements and their functions described herein may be implemented by software or by hardware. In any case, for executing their respective functions, correspondingly used devices comprise several means (not shown) which are required for control, processing and communication functionality. Such means may comprise, for example, a processor unit for executing instructions and processing data, memory means for storing instructions and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user (e.g. a screen, a keyboard and the like), interface means for establishing a communication connection under the control of the processor unit (e.g. wired and wireless interface means, an antenna, or the like) and the like.

According to Fig. 1, a communication system is shown in a mobile network environment for providing a communication connection to a correspondent node CN 28 via the Internet 2. The communication system comprises one or more communication units including mobile nodes MN1 20, MN2 21 , MN3 23, which are mobile phones or the like. The MN1 20, MN2 21 and MN3 22 are connectable to a routing network element via an IP bearer which is basically considered as a wireless link, such as a radio link, infrared link, bluetooth, and the like.

The routing network elements according to the present embodiment comprise a mobile router MR1 24 which may be also a mobile phone installed, for example, at a vehicle. The MR1 24 as a mobile router provides service to one or more mobile nodes. Furthermore, the mobile router is connected to a visited network via an access router 26 or, alternatively, to another mobile router via which the further connection link is established.

Additionally, as a further type of routing network element, a multi-link subnet router MSR1 25 is provided. The MSR1 25 represents a mobile router that is able to provide more than one link to other routers (mobile routers or access routers). The MSR1 25 is adapted to forward to communication units connected thereto an address information (i.e. a prefix) received in router advertisement procedure, which it has got from previous router (e.g. the access router). Furthermore, the MSR1 25 may function as a Neighbor Discovery (ND) proxy. This means that the MSR1 25 is proxying and relaying for all nodes on its router-mode interfaces.

It is to be noted that the MR 24 and the MSR 25 may represent also a communication unit like the mobile nodes in parallel to its function as a router. Additionally, the MR/MSR to be used in the present invention is multi-link subnet capable and able to delegate and forward prefixes. Furthermore, it is to be preferred that the MR/MSR is able to know communication units belonging to the same home network as the MR/MSR or to recognize that communication units belong to its home network. For this purpose, for example, a storage is provided in which the MR/MSR stores corresponding identification information, or a connection to a database is provided via which such information can be retrieved.

The routing network element MR1 24, MSR1 25 is connected to one or more access routers AR1 26 , AR2 27. The access routers AR1 26, AR2 27 are located in the edge of a visited network 1, i.e. a network being different to the home network 3 of the routing network elements MR1 24, MSR1 25. A visited network is e.g. an operator network 1 which has one or more ARs to which devices (e.g. routing network elements, communication units) can connect. Usually the visited network is able to provide a connection to the Internet 2 so that the mobile nodes MN1 20, MN2 21, MN3 22 can connect to the Internet via the access routers and MR/MSR 24/25.

Normally, a target device to which a communication unit intends to send data in a communication session is a correspondent node CN 28. The CN 28 can be located anywhere, e.g. in the Internet or in the visited network or in another network.

On the other hand, in the home network 3 of respective communication units or routing network elements, a home agent HA(x) 29 is provided which represents a router on the home link with which the mobile node has registered its current CoA. While the mobile node is away from home, the home agent intercepts packets on the home link destined to the mobile node's home address, encapsulates them, and tunnels them to the mobile node's registered care-of address.

The communication units MN1 20, MN2 21, MN3 22, the routing network element MR1 24, MSR1 25, and the access routers AR1 26, AR2 27 can be connected to each other by wireless connections, such as radio or infrared, as shown in Fig. 1 by flash-like arrows. The connections of the operator network 1, the Internet 2 as the communication network, and the home network 3 can be established by any type of suitable connection, i.e. wired or wireless connections.

In the following, communication units which belong to a same home network of one of the routing network elements in the mobile network (and thus having possibly the same HA) will be referred to also as "own mobile node MN" of the respective routing network element, while communication units having a different home network as a respective routing network element (and thus a different HA) will be referred to also as "other mobile node MN".

Generally, during operation, any router in the system, i.e. access router AR, mobile routers MR and multi-link subnet routers, advertise itself periodically to adjacent mobile nodes by sending router advertisement messages. These router advertisement messages comprise also a address information or prefix which can be used by mobile nodes connecting to the router to create the Care-of-Address CoA for the specific link. In case the mobile nodes do not receive any router advertisement message, e.g. for a predetermined time, a router solicitation message can be sent in order to search for a router for connection. When a router receives such a router solicitation message it answers by sending a router advertisement message.

The mobile router (MR 24 or MSR 25) is able to establish a bi-directional tunnel to it's home network and to request a prefix from the home agent (HA 29) to its nodes. When the prefix from the HA 29 is received, the MR 24 or MSR 25 advertises the given prefix to it's nodes and forwards all packets between it's nodes and bi-directional tunnel.

According to the embodiment of the present invention, the principle idea is that the routing network element, i.e. the MR 24 or MSR 25, is able to separate communication units (i.e. the MN 20, 21, 22) which connect to it, whether they would belong also to the same home network than the routing network element or not. On the basis of this knowledge the routing network element decides on the address information type to be forwarded to the connecting communication unit, i.e. whether it a previous router's prefix is to be sent or it a subnet prefix got from its HA is to be sent.

In detail, when the routing network element (here the mobile router MR) recognizes that a particular MN belongs also to its home network, the routing network element delegates the prefix got from MR's HA to the connecting MN. Then, the MN creates the CoA on the basis of the given prefix (related to the home network). The result is that the MR routes all the packets between the MN and a CN via the bi-directional tunnel which the MR had created to its HA.

On the other hand, when MR identifies a particular MN to not belonging to its home network but to another home network, the MR forwards the same prefix from it's previous access router (i.e. AR) or previous mobile router to the connecting MN. Then, the MN is able to create the CoA on the basis of the given prefix (related to the visited network). The MR routes all the packets between the MN and a CN via the previous router (e.g. the AR). Furthermore, the MN executes a binding procedure (binding update) by itself to its HA.

As a further option, even when the MR recognizes that the connecting communication unit (MN) belongs to the same home network, it sends the prefix got from MR's HA and in addition, as a secondary prefix, also the prefix got from previous router (e.g. AR) to the MN. In other words, the MR may add, as an option, the AR prefix as a further option to the message containing the HA prefix. Thus, it can be selected on the MN side which of the received prefixes is used for the route setting which is useful, for example, when the MN would prefer to not be bound to the same home agent as the MR.

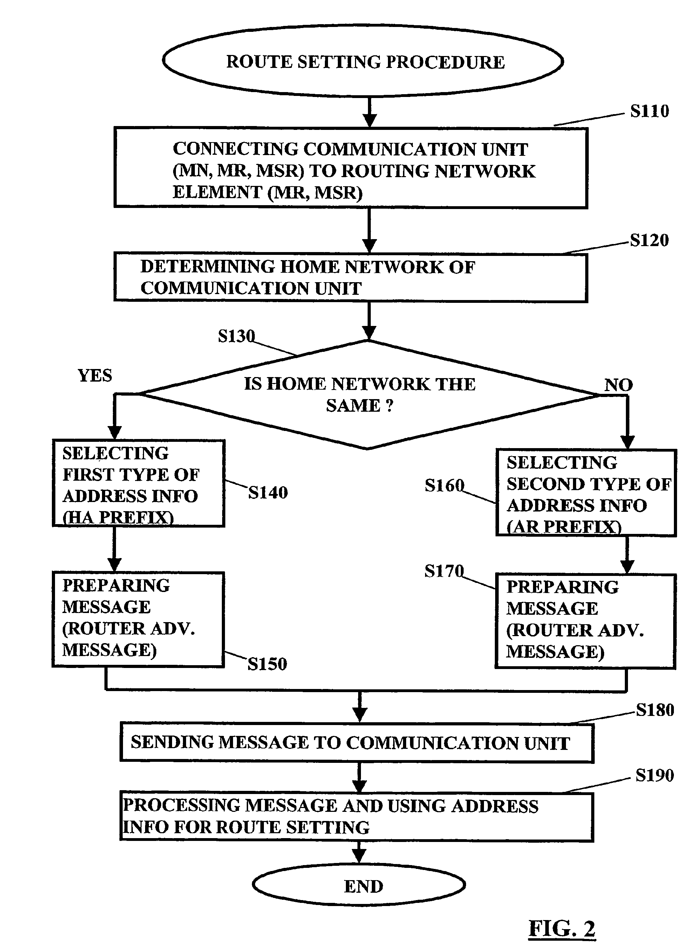

Fig. 2 shows a flow chart of a route setting procedure according to the embodiment of the present invention. In step S110, a communication unit, such as a MN 20, 21, 22, is trying to connect to a routing network element, such as a MR 24 or MSR 25. It is to be noted that the communication unit may also be another mobile router or multi-link network element. The connecting procedure is accompanied, for example, by answering to a router advertisement or router solicitation message, as described above.

The routing network element (MR 24 or MSR 25) detects that a communication unit is connecting to it and determines whether or not the home network of the communication unit is the same as the home network of the routing network element (step S120). Examples for such a determination processing are described below.

In step S130, it is decided whether or not the communication unit 20, 21, 22 and the routing network element 24, 25 belong to the same home network. If the decision is YES, step S140 follows in which a first type of address information is selected to be sent to the communication unit. The first type of address information is preferably the prefix received from the HA of the routing network element.

Then, in step S150, a message is prepared by means of which the address information selected in step S140 is sent to the communication unit. The message is preferably a router advertisement message including the prefix received from the routing network element's HA.

On the other hand, when it is decided in step 130 that the communication unit and the routing network element does not belong to the same home network (decision is NO), step S160 follows in which a second type of address information is selected to be sent to the communication unit. The second type of address information is preferably the prefix received from the access router or the previous router.

Then, in step S170, a message is prepared by means of which the address information selected in step S160 is sent to the communication unit. The message is preferably a router advertisement message including the prefix received from the previous (access) router.

In step S180, the prepared message (router advertisement message) comprising the selected address information is sent to the connecting communication unit.

The communication unit processes the transmitted message in order to recognize the included address information and uses the address information for a route setting (step S190). In other words, when the decision in step S130 is YES and the routing network element's HA prefix is received, the communication unit creates a CoA on the basis of the HA prefix and the routing network element routes all packets to and from the own communication unit / mobile node via the bi-directional tunnel established with the HA. On the other hand, when the decision in step S130 is NO and the AR prefix is received, the communication unit creates a CoA on the basis of the AR prefix and executes a binding procedure with its HA. The routing network element routes all packets to and from the communication unit via the previous router.

Even though not shown in Fig. 2, as a further option, in case the communication unit belongs to the same home network as the routing network element, it is also possible that the routing network element is adjusted to sent both types of address information to the own communication unit. In such a case, the communication unit can select the suitable prefix (HA or AR). When the AR prefix is selected, the same route setting is performed as in case the communication unit does not belong to the same home network. It is to be noted that in this optional scenario of sending both prefixes the communication unit becomes aware that the routing network element belongs to the same home network since it receives the HA prefix indicating it's home network. Hence, as a preferable default setting in the communication unit, it is to be preferred to select the HA prefix. However, when for example other circumstances in the communication environment makes it better or necessary to select the AR prefix and to perform a binding with the HA (for example due to an input user decision to do so, QoS reasons or the like) the communication unit is able to execute the binding immediately without requiring another communication with the routing network element.

Next, different examples for ways to determine whether or not the routing network element (MR or MSR) and the communication unit (e.g. the MN) belong to the same home network. In other words, there are several possibilities for the MR 24 (25) to separate or identify the different connecting MNs (i.e. whether it belongs to the same home network or not). The data needed to identify the MN could be provided by several ways which are listed below. It is to be noted that the given examples may be implemented separately or in any suitable combination in the routing network element according to the embodiment of the present invention.

Generally, the MR 24/25 may have kept or has an access to a list of Media Access Control (MAC) addresses, which can be gathered by means known for those skilled in the art, of devices that belong to the same home network as the MR and possibly have the same HA.

As a first way to identify the MN, the MR identifies the MNs on the basis of their link layer addresses (MAC addresses) when the link layer connection is formed and provide this MAC information to its IP stack. If the MR has kept a list of MAC-addresses (link-layer addresses), it can compare whether the MAC-address list contains the provided MAC-address. If the MN belongs to the list, the MR decides that the MN has the same home network and delegates the prefix from it's HA. If the MN does not belong to the list not, the MR forwards instead the prefix from the access router.

As a second way to identify the MN, any type of authentication method or mechanism can be used to prove that MN belongs to MR's home network after the IP connection is established. An example for such an authentication mechanism is described in the IEEE 802.1X standard. Here, a link layer authentication mechanism for a port-based network access control is defined that makes use of physical access characteristics of an IEEE 802 LAN infrastructures in order to provide a means of authenticating and authorizing devices attached to a LAN port that has point-to-point connection characteristics, and of preventing access to that port in cases in which the authentication and authorization process fails. A further possibility for such a mechanism is, for example, to use a HTTP (Hypertext Transfer Protocol) authentication in case the access router is also an ISP's (Internet service provider's) authentication server. If the MN belongs to the home network, the MR delegates the prefix from it's HA. If the MN does not belong to the home network, the MR forwards the prefix from the access router.

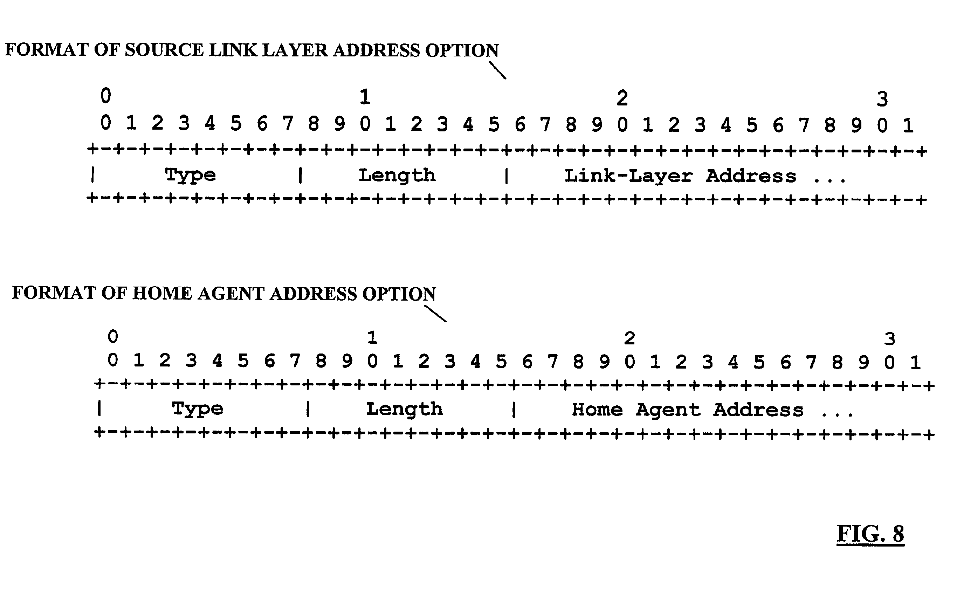

A third way to identify the MN is described now. After the MN has created the IP connection, the MN sends a router solicitation message to find a router (i.e. the MR). The router solicitation message comprises a source link-layer address option field as described in RFC 2451. The format of such a link-layer address option is shown in the upper half of Fig. 8. If the MR has kept a list of MAC-addresses (link-layer addresses), it can execute a comparison in order to decide whether the MAC-address list comprises the address provided in source link-layer address option. If the comparison results in that it belongs to the list, the MR delegates the prefix from it's HA. If it does not belong to the list, it forwards the prefix from the access router.

A fourth way to identify the MN is described now. After the MN has created the IP connection, the MN sends a router solicitation messages to the MR comprising a home agent address option. This home agent address option informs about the MN's HA address. The format of the home agent address option can be, for example, a standard router advertisement option format and is shown in the lower half of Fig. 8. Hence, it is possible for MR to check if the MN and MR have the same HA. The MR compares the MN's HA address with it's own HA address (prefix). If the addresses matches or the addresses comprise the same prefixes regarding the MR's home network, the MR delegates the prefix from it's HA. If not, the MR forwards the prefix from the access router.

It is to be noted that as a further alternative the source link layer address option and the home agent address option according to the third and fourth way could be combined in the one router solicitation message. In other words, the connecting MN (communication unit) includes both options/information in the router solicitation message. Furthermore, if the MR does not understand either of these options, it ignores the option and proceeds normally.

Furthermore, also the MR can add such a new home agent address option comprising the MR's HA. Thus, the MN is able to choose MR's HA's prefix, if the MN belongs to the same home network as the MR.

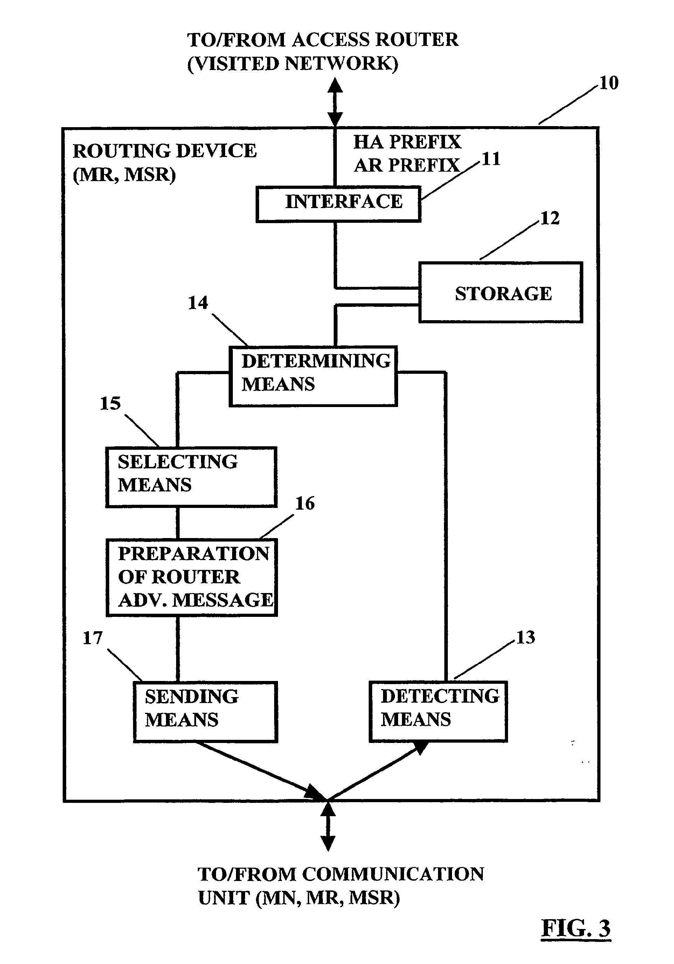

In Fig. 3, an example for the simplified structure of a routing network element or routing device according to the embodiment of the present invention is shown. It is to be noted that only those means are illustrated in the routing device, which are necessary for understanding the operation principle according to the embodiment.

Reference sign 10 denotes the routing device, which is, for example, a MR 24 or MSR 25. Reference sign 11 denotes an interface means providing connection to an access router or another routing network element for the routing device 10. Reference sign 12 denotes a storage for storing data required for the execution of the route setting procedure, such as the received address information (prefixes) from the access router and the home agent, and a list of MAC addresses or the like as mentioned above. Reference sign 13 denotes a detecting means for detecting that a communication unit (MN 20, 21, 22) connects to the routing device. For example, the detection is based on a receipt of a router solicitation message or the like. Reference sign 14 denotes a determining means for determining or identifying whether or not the connecting communication unit belongs to the same home network as the routing device 10. For this purpose, a connection to the storage means 12 is provided so that the determining means is able to retrieve the necessary data (HA prefix, MAC addresses and the like). The determination means is adapted to execute at least one of the four ways to identify the communication unit as described above. Reference sign 15 denotes a selecting means for selecting the type of address data (HA prefix and/or AR prefix) to be sent to the communication unit on the basis of the result of the determining means. The prefix to be sent is retrieved, for example, from the storage means 12 (not shown). Reference sign 16 denotes a preparation means for a router advertisement message with which the selected address information is sent. Reference sign 17 denotes a sending means for sending the router advertisement message prepared in the means 16.

Now, with reference to Figs. 4 to 7, exemplary situations are shown in a communication system when the prefix selection mechanism described above is executed.

The elements shown in the Figures correspond to those described in connection with Fig. 1. Furthermore, prefixes of the network elements are indicated in brackets besides the respective elements, which are used in the route setting procedure. Moreover, addresses formed on the basis of the forwarded prefixes are indicated.

The connections or routes established in the communication system according to the route setting mechanism are also illustrated in Figs. 4 to 7 wherein a bi-directional tunnel is indicated by a solid line with double arrows and a communication connection route of the communication unit 20, 21, 22, 23 (MN) to a CN 28 is indicated by a dashed line.

Generally, the starting situation throughout the Figs. 4 to 7 is that the MRS1 25 detects the AR 26 and connects to it. Thus, the MSR1 25 gets AR's 25 prefix (i.e. A:B::) and forms an address on the basis thereof (i.e. A:B::B, wherein B is used to identify the MSR1 25). Furthermore, as described above, the MSR1 25 executes a binding procedure to its HA1 29 and creates a bi-directional tunnel to the HA1 29, as described above. In this connection the MSR1 25 receives the HA1's 29 prefix (i.e. C:A::) by means of which it is able to form an address for a bi-directional tunnel interface (i.e. C:A::B). In other words, basically, the MSR1 25 has always the AR's 26 prefix (i.e. A:B:: in the shown arrangement) but it is also able to create a bi-directional tunnel to the HA1 29 and therefore gets the HA1's 29 prefix (i.e. forms an address C:A::B).

According to Fig. 4, MN1 20 connects to the MSR1 25. The MSR1 25 identifies that MN1 20 belongs to the same home network (HA1 network) and delegates it's prefix to the MN1 20 (i.e. C:A::). The address created by the MN1 20 is thus C:A::Z, wherein Z is used to identify the MN1 20. As a result, both the MN1 20 and the MSR1 25 uses the bi-directional tunnel via HA1 29.

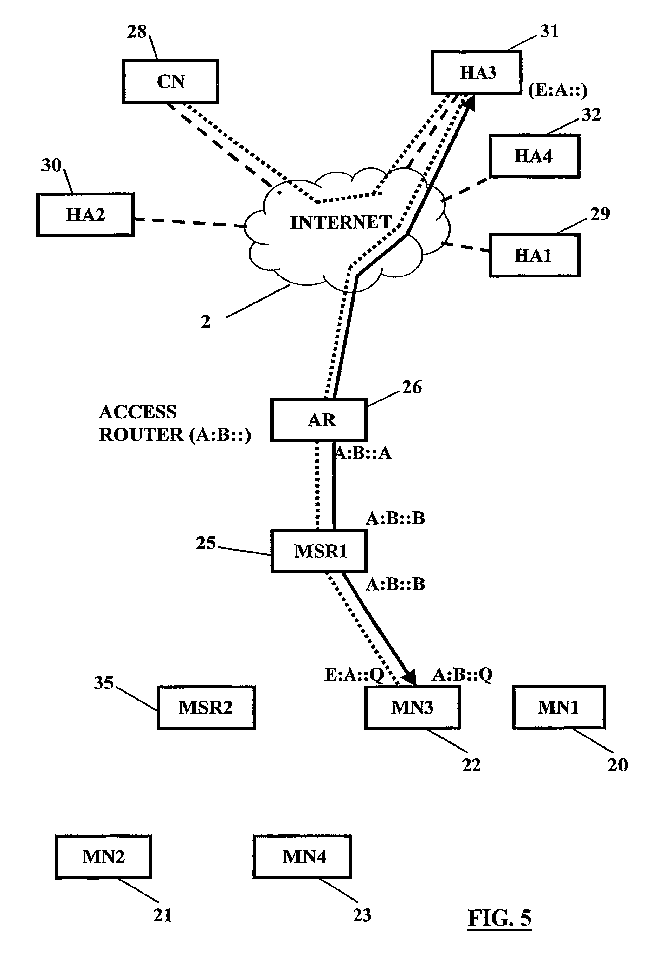

According to Fig. 5, MN3 22 connects to the MSR1 25. MSR1 25 notices that MN3 22 does not belong to the same home network and forwards the AR's 26 prefix (i.e. A:B::). The MN3 22 creates a bi-directional tunnel to its HA3 31 and binds it's CoA (i.e. A:B::Q). Additionally, the MN3 22 receives, after the binding operation, it's home network prefix from HA3 31 (i.e. E:A::, resulting in an address E:A::Q). As a result, the MN3 22 uses a bi-directional tunnel via HA3 31 from its home network. It is to be noted that even not shown in Fig. 5 the MSR1 25 has also a connection (bi-directional tunnel) to it's home agent HA1 29.

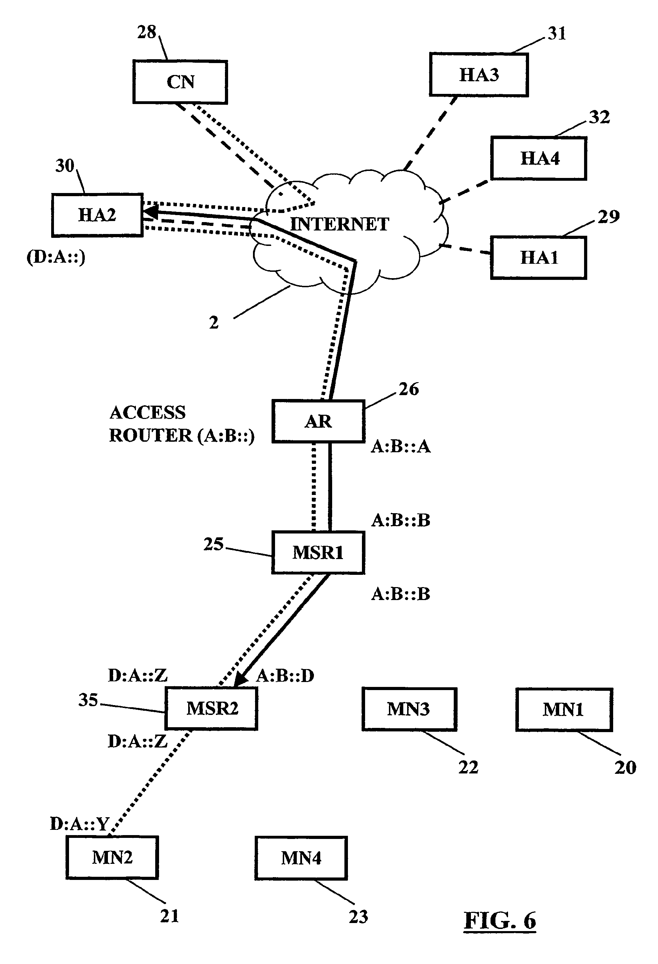

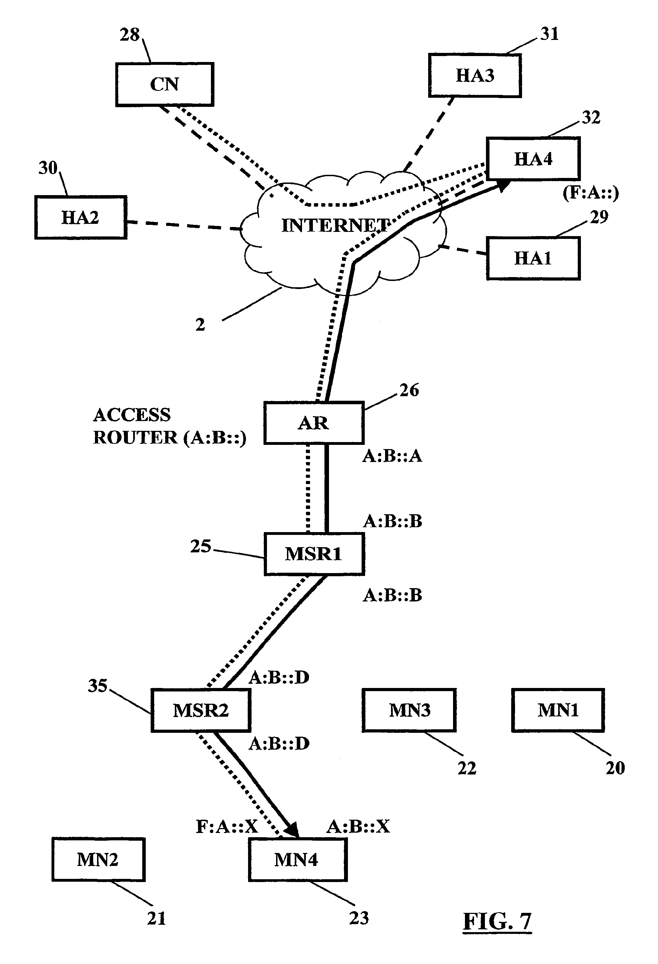

In contrast to Fig. 4 and 5, in which a mobile node connects to the MSR 1 25 , according to Figs. 6 and 7 another MSR (MSR2 35) is connecting. This means that the MSR2 is also router for its own mobile nodes. Generally for Figs. 6 and 7, the MRS2 35 connects to the MSR1 25. The MSR1 25 notices that MSR2 35 does not belong to the same home network and forwards the AR's 26 prefix (i.e. A:B::). The MSR2 35 now creates bi-directional tunnel to its HA2 30 (prefix D:A::) and binds it's CoA (address is A:B::D). Additionally, the MSR 2 35 receives the home network prefix from its HA2 30 to be advertised further.

Now, according to Fig. 6, MN2 21 detects the MSR2 35 and connects to it. The MSR2 35 identifies that MN2 21 belongs to the same home network and delegates HA2's 30 prefix to the MN2 21. Thus, the address the MN2 21 creates is D:A::Y. As a result, both the MN2 21 and the MSR2 35 uses the bi-directional tunnel via HA2 30.

On the other hand, according to Fig. 7, MN4 23 connects to the MSR2 35. The MSR2 35 notices that MN4 23 does not belong to the same home network and forwards the MSR1's 25 prefix (=AR's 26 prefix). The MN4 23 creates now a bi-directional tunnel to its HA4 32 (prefix is F:A::) and binds it's care of address (address is A:B::X). It also gets it's home network prefix from HA4 32, which results in an address F:A::X. As a result, the MN4 23 uses a bi-directional tunnel via HA4 32 from its home network.

Now, a descriptive example will be given so as to illustrate the effect of the mechanism described above. Assume a situation where there are, for example, multipart-IP-capable mobile phones or other devices capable of connecting each other via multiple wireless links. For example the device has core unit functioning as a MSR and satellites as MN. If another user wishes to use this core unit (e.g. a high bandwidth radio) with its satellite device (e.g. a big screen viewer device) while the first device is connected to a certain AR but got also a prefix from its HA for satellite devices (such as normal phone units), the core unit can forward the AR's prefix to the viewer device. Thus, streaming data could pass the AR to its HA (or straight to the source), but not through the HA of the first device.

As described above, there is proposed a mechanism for setting a route for a communication connection of a communication unit in a mobile network environment. When a communication unit connects to a routing network element it is determined by the routing network element whether or not the communication unit belongs to the same home network as the routing network element. Then, a selection for an address information to be sent to the communication unit is made. If it is determined that the communication unit belongs to the same home network as the routing network element, a first type of address information is selected, or if it is determined that the communication unit belongs not to the same home network as the routing network element, a second type of address information is selected. The selected address information is sent from the routing network element to the communication unit, in which it is used for setting a route for the communication unit.

It should be understood that the above description and accompanying figures are merely intended to illustrate the present invention by way of example only. The described embodiments of the present invention may thus vary within the scope of the attached claims.

## Claims

1. A method of setting a route for a communication connection of a communication unit in a mobile network environment, the method comprising steps of:
connecting a communication unit to a routing network element;
determining, in the routing network element, whether the communication unit belongs to a home network of the routing network element;
selecting, if the communication unit belongs to the home network of the routing network element, a first type of address information, or selecting, if the communication unit does not belong to the home network of the routing network element, a second type of address information;
sending the first or second type of address information from the routing network element to the communication unit; and
using the first or second type of address information received from the routing network element for setting a route for the communication unit,
wherein
the first type of address information is related to the home network of the routing network element and comprises a first prefix received from a home agent located in the home network of the routing network element, and
the second type of address information is related to a visited network different to the home network of the routing network element and comprises a second prefix received from a router connected to the visited network, wherein the routing network element and the router are connected with each other.

2. The method according to claim 1, wherein the determining step comprises steps of
identifying link layer address information transmitted from the communication unit to the routing network element when a link layer connection is established, and
comparing the link layer address information with stored link layer address information of communication units known as belonging to the home network of the routing network element.

3. The method according to claim 1 or 2, wherein the determining step comprises a step of
executing an authentication procedure for proving that the communication unit belongs to the home network of the routing network element.

4. The method according to any of the preceding claims,
wherein the determining step comprises steps of
receiving a router solicitation message from the communication unit including a data field indicating a source link layer address information, and
comparing the source link layer address information with stored link layer address information of communication units known as belonging to the home network of the routing network element.

5. The method according to any of the preceding claims,
wherein the determining step comprises steps of
receiving a router solicitation message from the communication unit including a data field indicating a home agent address information of the communication unit's home network,
comparing the home agent address information of the communication unit with other home agent address information of the routing network element.

6. The method according to any of the preceding claims, wherein the sending step comprises a step of sending a router advertisement message from the routing network element to the communication unit, the router advertisement message including the first or second type of address information.

7. The method according to any of the preceding claims, wherein the sending step comprises a step of sending the second type of address information when the first type of address information is selected, , and the first type of address information when the second type of address information is selected.

8. The method according to claim 7, further comprising a step of selecting, in the communication unit, one of the first and second types of address information received from the routing network element to be used in the step of using the address information.

9. The method according to any of the preceding claims, wherein the communication unit and the routing network element are respective mobile nodes movable in a mobile network environment, and the routing network element comprises at least one of a mobile router and a multi link subnet router.

10. The method according to any of the preceding claims, wherein the communication unit comprises another routing network element.

11. The method according to any of the preceding claims, further comprising using a type of Internet protocol for a mobile network environment.

12. The method according to any of the preceding claims, further comprising steps of
using, for a communication connection of the communication unit, a bi-directional connection established between the routing network element and the home network when the communication unit and the routing network element belong to the home network, and
establishing the bi-directional connection between the communication unit and the home network when the communication unit does not belong to the home network of the routing network element.

13. A communication system usable in a mobile network environment comprising at least one routing network element and at least one communication unit, the system configured to set a route for a communication connection of a communication unit in the mobile network environment,
wherein the routing network element is configured to
detect that the communication unit connects to the routing network element,
determine whether the communication unit belongs to a home network of the routing network element,
select, if the communication unit belongs to the home network of the routing network element, a first type of address information, or select, if the communication unit belongs not to the home network of the routing network element, a second type of address information, and
send the first or second type of address information to the communication unit,
wherein the communication unit is configured to
process the first or second type of address information received from the routing network element and
use the address information for setting a route for the communication unit
wherein
the first type of address information is related to the home network of the routing network element and comprises a prefix received from a home agent located in the home network of the routing network element, and
the second type of address information is related to a visited network different than the home network of the routing network element and comprises another prefix received from a router connected to the visited network wherein the routing network element and the router are connected with each other.

14. The system according to claim 13, wherein the routing network element determines whether the communication unit belongs to the home network by
identifying link layer address information transmitted from the communication unit to the routing network element when a link layer connection is established, and
comparing the link layer address information with stored link layer address information of communication units known as belonging to the home network of the network element.

15. The system according to claim 13 or 14, wherein the routing network element determines whether the communication unit belongs to the home network by
executing an authentication procedure for proving that the communication unit belongs to the home network of the routing network element.

16. The system according to any of claims 13 to 15, wherein the routing network element determines whether the communication unit belongs to the home network by
receiving a router solicitation message from the communication unit comprising a data field indicating a source link layer address information, and
comparing the source link layer address information with stored link layer address information of communication units known as belonging to the home network of the routing network element.

17. The system according to any of claims 13 to 16, wherein the routing network element determines whether the communication unit belongs to the home network by
receiving a router solicitation message from the communication unit comprising a data field indicating a home agent address information of the communication unit's home network,
comparing the home agent address information of the communication unit with other home agent address information of the routing network element.

18. The system according to any of claims 13 to 17, wherein routing network element is configured to send a router advertisement message to the communication unit, the router advertisement message including the first or second type of address information.

19. The system according to any of claims 13 to 18, wherein the routing network element is configured to send the second type of address information when the first type of address information is selected, and the first type of address information when the second type of address information is selected, in addition.

20. The system according to claim 19, wherein the communication unit is configured to select one of the first and second types of address information received from the routing network element and to use the one of the first and second address information for setting the route for the communication unit.

21. The system according to any of claims 13 to 20, wherein the communication unit and the routing network element are respective mobile nodes movable in the mobile network environment, wherein the routing network element comprises at least one of a mobile router and a multi link subnet router.

22. The system according to any of claims 13 to 21, wherein the communication unit comprises another routing network element.

23. The system according to any of claims 13 to 22, wherein the mobile network environment uses a type of Internet protocol.

24. The system according to any of claims 13 to 23, wherein the system is configured to
use, for a communication connection of the communication unit, a bi-directional connection established between the routing network element and the home network when the communication unit and the routing network element belong to the home network, and
establish the bi-directional connection between the communication unit and the home network when the communication unit does not belong to the home network as the routing network element.

25. A routing device usable in a mobile network environment and employed in a setting of a route for a communication connection of a communication unit in the mobile network environment, wherein the routing device comprises:
detecting means for detecting that a communication unit connects to the routing device;
determining means for determining whether the communication unit belongs to the home network of the routing device,
selecting means for selecting a first type of address information, when the communication unit belongs to the home network of the routing device, or for selecting a second type of address information, when the communication unit belongs not to the home network of the routing device, and
sending means for sending the first or second type of address information to the communication unit, wherein
the first type of address information is related to the home network of the routing device and comprises a prefix received from a home agent located in the home network of the routing device, and
the second type of address information is related to a visited network different to the home network of the routing device and comprises another prefix received from a router connected to the visited network wherein the routing device and the router are connected with each other.

26. The routing device according to claim 25, wherein the determining means comprises
identifying means for identifying a link layer address information transmitted from the communication unit to the routing device when a link layer connection is established, and
comparing means for comparing the link layer address information with stored link layer address information of communication units known as belonging to the home network of the routing device.

27. The routing device according to claim 25 or 26, wherein the determining means determines whether the communication unit belongs to the home network by executing an authentication procedure for proving that the communication unit belongs to the home network of the routing device.

28. The routing device according to any of claims 25 to 27,
wherein the determining means comprises
processing means for processing a router solicitation message received from the communication unit, the router solicitation message comprising a data field indicating a source link layer address information, and
comparing means for comparing the source link layer address information with stored link layer address information of communication units known as belonging to the home network of the routing device.

29. The routing device according to any of claims 25 to 28,
wherein the determining means comprises
processing means for processing a router solicitation message from the communication unit, the router solicitation message comprising a data field indicating a home agent address information of the communication unit's home network, and
comparing means for comparing the home agent address information of the communication unit with another home agent address information of the routing device.

30. The routing device according to any of claims 25 to 29, wherein routing device is configured to send a router advertisement message to the communication unit, the router advertisement message including the first or second type of address information.

31. The routing device according to any of claims 25 to 30, wherein the routing device is configured to send the second type of address information when the first type of address information is selected, , and the first type of address information when the second type of address information is selected.

32. The routing device according to any of claims 25 to 31, wherein the communication unit and the routing device are respective mobile nodes movable in a mobile network environment, wherein the routing device comprises at least one of a mobile router and a multi link subnet router.

33. The routing device according to any of claims 25 to 32,
wherein the communication unit comprises another router.

34. The routing device according to any of claims 25 to 33, wherein the mobile network environment uses a type of Internet protocol.

35. The routing device according to any of claims 25 to 34,
wherein
a bi-directional connection established between the routing device and the home network is used for a communication connection of the communication unit when the communication unit and the routing device belong to the home network.

36. A mobile node connectable to a mobile communication network, the mobile node comprising:
receiving means configured to receive, from a routing network element, at least one of a first type and a second type of address information;
setting means configured to set a route for a communication connection based on the at least one of a first type and a second type of address information; selecting means for selecting, when both the first type and the second type of address information are received, one of the first and second types for setting the route, wherein
the first type of address information is related to the home network of the routing network element and comprises a prefix received from a home agent located in the home network of the routing network element, and the second type of address information is related to a visited network different to the home network of the routing network element and comprises another prefix received from a router connected to the visited network
wherein the routing network element and the router are connected with each other.

## Patentansprüche

1. Verfahren zum Einstellen eines Leitwegs für eine Kommunikationsverbindung einer Kommunikationseinheit in einer Mobilnetzwerkumgebung, wobei das Verfahren die Schritte aufweist:
Verbinden einer Kommunikationseinheit mit einem Leitweglenkungsnetzwerkelement;
Bestimmen in dem Leitweglenkungsnetzwerkelement, ob die Kommunikationseinheit zu einem Heimatnetzwerk des Leitweglenkungsnetzwerkelements gehört;
Auswählen eines ersten Typs einer Adressinformation, wenn die Kommunikationseinheit zu dem Heimatnetzwerk des Leitweglenkungsnetzwerkelements gehört, oder Auswählen eines zweiten Typs einer Adressinformation, wenn die Kommunikationseinheit nicht zu dem Heimatnetzwerk des Leitweglenkungsnetzwerkelements gehört;
Senden des ersten oder zweiten Typs einer Adressinformation von dem Leitweglenkungsnetzwerkelement an die Kommunikationseinheit; und
Verwenden des von dem Leitweglenkungsnetzwerkelement empfangenen ersten oder zweiten Typs einer Adressinformation zum Einstellen eines Leitwegs für die Kommunikationseinheit,
wobei
der erste Typ einer Adressinformation auf das Heimatnetzwerk des Leitweglenkungsnetzwerkelements bezogen ist und ein erstes Präfix aufweist, das von einem in dem Heimatnetzwerk des Leitweglenkungsnetzwerkelements befindlichen Heimatagenten empfangen wird, und
der zweite Typ einer Adressinformation auf ein von dem Heimatnetzwerk des Leitweglenkungsnetzwerkelements verschiedenes besuchtes Netzwerk bezogen ist und ein zweites Präfix aufweist, das von einem mit dem besuchten Netzwerk verbunden Router empfangen wird, wobei das Leitweglenkungsnetzwerkelement und der Router miteinander verbunden sind.

2. Verfahren nach Anspruch 1, wobei der Schritt des Bestimmens die Schritte aufweist
Identifizieren einer
Verbindungsschichtadressinformation, die von der Kommunikationseinheit an das Leitweglenkungsnetzwerkelement übertragen wird, wenn eine Verbindungsschichtverbindung aufgebaut ist, und
Vergleichen der Verbindungsschichtadressinformation mit der gespeicherten Verbindungsschichtadressinformation von Kommunikationseinheiten, von denen bekannt ist, dass sie zu dem Heimatnetzwerk des
Leitweglenkungsnetzwerkelements gehören.

3. Verfahren nach Anspruch 1 oder 2, wobei der Schritt des Bestimmens einen Schritt aufweist des
Ausführens einer Authentifizierungsprozedur zum Prüfen, dass die Kommunikationseinheit zu dem Heimatnetzwerk des Leitweglenkungsnetzwerkelements gehört.

4. Verfahren nach einem der vorhergehenden Ansprüche,
wobei der Bestimmungsschritt die Schritte aufweist:
Empfangen einer Routerabfragenachricht von der Kommunikationseinheit einschließlich einem Datenfeld, das eine Quellverbindungsschichtadressinformation anzeigt, und
Vergleichen der Quellverbindungsschichtadressinformation mit einer gespeicherten Verbindungsschichtadressinformation von Kommunikationseinheiten, von denen bekannt ist, dass sie zu dem Heimatnetzwerk des Leitweglenkungsnetzwerkelements gehören.

5. Verfahren nach einem der vorhergehenden Ansprüche,
wobei der Schritt des Bestimmens die Schritte aufweist:
Empfangen einer Routerabfragenachricht von der Kommunikationseinheit, die ein Datenfeld enthält, das eine Heimatagentenadressinformation des Heimatnetzwerks der Kommunikationseinheit anzeigt,
Vergleichen der Heimatagentenadressinformation der Kommunikationseinheit mit einer anderen Heimatagentenadressinformation des Leitweglenkungsnetzwerkelements.

6. Verfahren nach einem der vorhergehenden Ansprüche, wobei der Schritt des Sendens einen Schritt des Sendens einer Routerankündigungsnachricht von dem Leitweglenkungsnetzwerkelement an die Kommunikationseinheit aufweist, wobei die Routerankündigungsnachricht den ersten oder zweiten Typ einer Adressinformation enthält.

7. Verfahren nach einem der vorhergehenden Ansprüche, wobei der Schritt des Sendens einen Schritt des Sendens des zweiten Typs einer Adressinformation aufweist, wenn der erste Typ einer Adressinformation ausgewählt ist, und des ersten Typs einer Adressinformation, wenn der zweite Typ einer Adressinformation ausgewählt ist.

8. Verfahren nach Anspruch 7, ferner mit einem Schritt des Auswählens, in der Kommunikationseinheit, von einem der ersten und zweiten Typen einer Adressinformation, die von dem Leitweglenkungsnetzwerkelement empfangen wird, um sie in dem Schritt des Verwendens der Adressinformation zu verwenden.

9. Verfahren nach einem der vorhergehenden Ansprüche, wobei die Kommunikationseinheit und das Leitweglenkungsnetzwerkelement jeweils mobile Knoten sind, die in einer mobilen Netzwerkumgebung bewegbar sind, und das Leitweglenkungsnetzwerkelement zumindest einen aus einem mobilen Router und einem Multiverbindungssubnetzrouter aufweist.

10. Verfahren nach einem der vorhergehenden Ansprüche, wobei die Kommunikationseinheit ein anderes Leitweglenkungsnetzwerkelement aufweist.

11. Verfahren nach einem der vorhergehenden Ansprüche, ferner mit Verwenden eines Typs eines Interprotokolls für eine mobile Netzwerkumgebung.

12. Verfahren nach einem der vorhergehenden Ansprüche, ferner mit den Schritten:
Verwenden einer bidirektionalen Verbindung für eine Kommunikationsverbindung der Kommunikationseinheit, die zwischen dem Leitweglenkungsnetzwerkelement und dem Heimatnetzwerk aufgebaut wird, wenn die Kommunikationseinheit und das Leitweglenkungsnetzwerkelement zu dem Heimatnetzwerk gehören, und
Aufbauen der bidirektionalen Verbindung zwischen der Kommunikationseinheit und dem Heimatnetzwerk, wenn die Kommunikationseinheit nicht zu dem Heimatnetzwerk des Leitweglenkungsnetzwerkelements gehört.

13. Kommunikationssystem, das in einer mobilen Netzwerkumgebung verwendbar ist, die zumindest ein Leitweglenkungsnetzwerkelement und zumindest eine Kommunikationseinheit aufweist, wobei das System konfiguriert ist, einen Leitweg für eine Kommunikationsverbindung einer Kommunikationseinheit in der mobilen Netzwerkumgebung einzustellen, wobei das Leitweglenkungsnetzwerkelement konfiguriert ist, um:
zu erfassen, dass die Kommunikationseinheit sich mit dem Leitweglenkungsnetzwerkelement verbindet,
zu bestimmen, ob die Kommunikationseinheit zu einem Heimatnetzwerk des Leitweglenkungsnetzwerkelements gehört,
einen ersten Typ einer Adressinformation auszuwählen, wenn die Kommunikationseinheit zu dem Heimatnetzwerk des Leitweglenkungsnetzelements gehört, oder einen zweiten Typ einer Adressinformation auszuwählen, wenn die Kommunikationseinheit nicht zu dem Heimatnetzwerk des Leitweglenkungsnetzwerkelements gehört, und
den ersten oder zweiten Typ einer Adressinformation zu der Kommunikationseinheit zu senden, wobei die Kommunikationseinheit konfiguriert ist,
den ersten oder zweiten Typ einer Adressinformation zu verarbeiten, die von dem Leitweglenkungsnetzwerkelements empfangen wird, und
die Adressinformation zum Einstellen eines Leitwegs für die Kommunikationseinheit zu verwenden,
wobei
der erste Typ einer Adressinformation auf das Heimatnetzwerk des Leitweglenkungsnetzwerkelements bezogen ist und ein Präfix aufweist, das von einem in dem Heimatnetzwerk des Leitweglenkungsnetzwerkelements befindlichen Heimatagenten empfangen wird, und
der zweite Typ einer Adressinformation auf ein besuchtes Netzwerk bezogen ist, das von dem Heimatnetzwerk des Leitweglenkungsnetzwerkelements verschieden ist, und ein anderes Präfix aufweist, das von einem mit dem besuchten Netzwerk verbundenen Router empfangen wird, wobei das Leitweglenkungsnetzwerkelement und der Router miteinander verbunden sind.

14. System nach Anspruch 13, wobei das Leitweglenkungsnetzwerkelement bestimmt, ob die Kommunikationseinheit zu dem Heimatnetzwerk gehört durch
Identifizieren einer Verbindungsschichtadressinformation, die von der Kommunikationseinheit an das Leitweglenkungsnetzwerkelement übertragen wird, wenn eine Verbindungsschichtverbindung aufgebaut wird, und
Vergleichen der Verbindungsschichtadressinformation mit einer gespeicherten Verbindungsschichtadressinformation von Kommunikationseinheiten, von denen bekannt ist, dass sie zu dem Heimatnetzwerk des Netzwerkelements gehören.

15. System nach Anspruch 13 oder 14, wobei das Leitweglenkungsnetzwerkelement bestimmt, ob die Kommunikationseinheit zu dem Heimatnetzwerk gehört, durch
Ausführen einer Authentifizierungsprozedur zum Überprüfen, dass die Kommunikationseinheit zu dem Heimatnetzwerk des Leitweglenkungsnetzwerkelements gehört.

16. System nach einem der Ansprüche 13 bis 15, wobei das Leitweglenkungsnetzwerkelement bestimmt, ob die Kommunikationseinheit zu dem Heimatnetzwerk gehört, durch
Empfangen einer Routerabfragenachricht von der Kommunikationseinheit, die ein Datenfeld aufweist, das eine Quellverbindungsschichtadressinformation aufweist, und
Vergleichen der Quellverbindungsschichtadressinformation mit einer gespeicherten Verbindungsschichtadressinformation von Kommunikationseinheiten, von denen bekannt ist, dass sie zu dem Heimatnetzwerk des Leitweglenkungsnetzwerkelements gehören.

17. System nach einem der Ansprüche 13 bis 16, wobei das Leitweglenkungsnetzwerkelement bestimmt, ob die Kommunikationseinheit zu dem Heimatnetzwerk gehört, durch
Empfangen einer Routerabfragenachticht von der Kommunikationseinheit, die ein Datenfeld aufweist, das eine Heimatagentenadressinformation des Heimatnetzwerks der Kommunikationseinheit aufweist,
Vergleichen der Heimatagentenadressinformation der Kommunikationseinheit mit einer anderen Heimatagentenadressinformation des Leitweglenkungsnetzwerkelements.

18. System nach einem der Ansprüche 13 bis 17, wobei das Leitweglenkungsnetzwerkelement konfiguriert ist, eine Routerankündigungsnachricht an die Kommunikationseinheit zu senden, wobei die Routerankündigungsnachricht den ersten oder zweiten Typ einer Adressinformation enthält.

19. System nach einem der Ansprüche 13 bis 18, wobei das Leitweglenkungsnetzwerkelement konfiguriert ist, zusätzlich den zweiten Typ einer Adressinformation zu senden, wenn der erste Typ einer Adressinformation ausgewählt ist, und den ersten Typ einer Adressinformation, wenn der zweite Typ einer Adressinformation ausgewählt ist.

20. System nach Anspruch 19, wobei die Kommunikationseinheit konfiguriert ist, eine aus den ersten und zweiten Typen einer Adressinformation auszuwählen, die von dem Leitweglenkungsnetzwerkelement empfangen werden, und die eine aus der ersten und zweiten Adressinformation zu verwenden, um den Leitweg für die Kommunikationseinheit einzustellen.

21. System nach einem der Ansprüche 13 bis 20, wobei die Kommunikationseinheit und das Leitweglenkungsnetzwerkelement jeweils mobile Knoten sind, die in der mobilen Netzumgebung bewegbar sind, wobei das Leitweglenkungsnetzwerkelement zumindest einen aus einem mobilen Router und einem Multiverbindungssubnetzrouter aufweist.

22. System nach einem der Ansprüche 13 bis 21, wobei die Kommunikationseinheit ein anderes Leitweglenkungsnetzwerkelement aufweist.

23. System nach einem der Ansprüche 13 bis 22, wobei die Mobilnetzwerkumgebung einen Typ eines Internetprotokolls verwendet.

24. System nach einem der Ansprüche 13 bis 23, wobei das System konfiguriert ist,
eine bidirektionale Verbindung für eine Kommunikationsverbindung der Kommunikationseinheit zu verwenden, die zwischen dem Leitweglenkungsnetzwerkelement und dem Heimatnetzwerk aufgebaut ist, wenn die Kommunikationseinheit und das Leitweglenkungsnetzwerkelement zu dem Heimatnetzwerk gehören, und
die bidirektionale Verbindung zwischen der Kommunikationseinheit und dem Heimatnetzwerk aufzubauen, wenn die Kommunikationseinheit nicht zu dem Heimatnetzwerk als dem Leitweglenkungsnetzwerkelement gehört.

25. Leitweglenkungsvorrichtung, die in einer Mobilnetzwerkumgebung verwendbar ist, und für ein Einstellen eines Leitwegs für eine Kommunikationsverbindung einer Kommunikationseinheit in der Mobilnetzwerkumgebung angewendet wird, wobei die Leitweglenkungsvorrichtung aufweist:
eine Erfassungseinrichtung zum Erfassen, dass eine Kommunikationseinheit sich mit der Leitweglenkungsvorrichtung verbindet;
eine Bestimmungseinrichtung zum Bestimmen, ob die Kommunikationseinheit zu dem Heimatnetzwerk der Leitweglenkungsvorrichtung gehört,
eine Auswähleinrichtung zu Auswählen eines ersten Typs einer Adressinformation, wenn die Kommunikationseinheit zu dem Heimatnetzwerk der Leitweglenkungsvorrichtung gehört, oder zum Auswählen eines zweiten Typs einer Adressinformation, wenn die Kommunikationseinheit nicht zu dem Heimatnetzwerk der Leitweglenkungsvorrichtung gehört, und
eine Sendeeinrichtung zum Senden des ersten oder zweiten Typs einer Adressinformation an die Kommunikationseinheit, wobei
der erste Typ einer Adressinformation auf das Heimatnetzwerk des Leitweglenkungsvorrichtung bezogen ist, und ein Präfix aufweist, dass von einem in dem Heimatnetzwerk der Leitweglenkungsvorrichtung befindlichen Heimatagenten empfangen wird, und
der zweite Typ einer Adressinformation auf ein von dem Heimatnetzwerk der Leitweglenkungsvorrichtung verschiedenes besuchtes Netzwerk bezogen ist und ein anderes Präfix aufweist, das von einem Router empfangen wird, der mit dem besuchten Netzwerk verbunden ist, wobei die Leitweglenkungsvorrichtung und der Router miteinander verbunden sind.

26. Leitweglenkungsvorrichtung nach Anspruch 25, wobei die Bestimmungseinrichtung aufweist
eine Identifizierungseinrichtung zum Identifizieren einer Verbindungsschichtadressinformation, die von der Kommunikationseinheit an die Leitweglenkungsvorrichtung übertragen wird, wenn eine Verbindungsschichtverbindung aufgebaut ist, und
eine Vergleichseinrichtung zum Vergleichen der Verbindungsschichtadressinformation mit einer gespeicherten Verbindungsschichtadressinformation von Kommunikationseinrichtungen, von denen bekannt ist, dass sie zu dem Heimatnetzwerk der Leitweglenkungsvorrichtung gehören.

27. Leitweglenkungsvorrichtung nach Anspruch 25 oder 26, wobei die Bestimmungseinrichtung durch Ausführen einer Authentifizierungsprozedur zum Prüfen, dass die Kommunikationseinheit zu dem Heimatnetzwerk der Leitweglenkungsvorrichtung gehört, bestimmt, ob die Kommunikationseinheit zu dem Heimatnetzwerk gehört.

28. Leitweglenkungsvorrichtung nach einem der Ansprüche 25 bis 27, wobei die Bestimmungseinrichtung aufweist:
eine Verarbeitungseinrichtung zum Verarbeiten einer Routerabfragenachricht, die von der Kommunikationseinheit empfangen wird, wobei die Routerabfragenachricht ein Datenfeld aufweist, das eine Quellverbindungsschichtadressinformation anzeigt, und
eine Vergleichseinrichtung zum Vergleichen der Quellverbindungsschichtadressinformation mit einer gespeicherten Verbindungsschichtadressinformation von Kommunikationseinheiten, von denen bekannt ist, dass sie zu dem Heimatnetzwerk der Leitweglenkungsvorrichtung gehören.

29. Leitweglenkungsvorrichtung nach einem der Ansprüche 25 bis 28, wobei die Bestimmungseinrichtung aufweist:
ene Verarbeitungseinrichtung zum Verarbeiten einer Routerabfragenachricht von der Kommunikationseinheit, wobei die Routerabfragenachricht ein Datenfeld aufweist, das eine Heimatagentenadressinformation des Heimatnetzwerks der Kommunikationseinheit aufweist, und
eine Vergleichseinrichtung zum Vergleichen der Heimatagentenadressinformation der Kommunikationseinheit mit einer anderen Heimatagentenadressinformation der Leitweglenkungsvorrichtung.

30. Leitweglenkungsvorrichtung nach einem der Ansprüche 25 bis 29, wobei die Leitweglenkungsvorrichtung konfiguriert ist, eine Routerankündigungsnachricht an die Kommunikationseinheit zu senden, wobei die Routerankündigungsnachricht den ersten oder zweiten Typ einer Adressinformation enthält.

31. Leitweglenkungsvorrichtung nach einem der Ansprüche 25 bis 30, wobei die Leitweglenkungsvorrichtung konfiguriert ist, den zweiten Typ einer Adressinformation zu senden, wenn der erste Typ einer Adressinformation ausgewählt ist, und den ersten Typ einer Adressinformation, wenn der zweite Typ einer Adressinformation ausgewählt ist.

32. Leitweglenkungsvorrichtung nach einem der Ansprüche 25 bis 31, wobei die Kommunikationseinheit und die Leitweglenkungsvorrichtung jeweils mobile Knoten sind, die in einer Mobilnetzwerkumgebung bewegbar sind, wobei die Leitweglenkungsvorrichtung zumindest einen aus einem mobilen Router und einem Multiverbindungssubnetzrouter aufweist.

33. Leitweglenkungsvorrichtung nach einem der Ansprüche 25 bis 32, wobei die Kommunikationseinheit einen anderen Router aufweist.

34. Leitweglenkungsvorrichtung nach einem der Ansprüche 25 bis 33, wobei die Mobilnetzwerkumgebung einen Typ eines Internetprotokolls verwendet.

35. Leitweglenkungsvorrichtung nach einem der Ansprüche 25 bis 34, wobei für eine Kommunikationsverbindung der Kommunikationseinheit eine zwischen der Leitweglenkungsvorrichtung und dem Heimatnetzwerk aufgebaute bidirektionale Verbindung verwendet wird, wenn die Kommunikationseinheit und die Leitweglenkungsvorrichtung zu dem Heimatnetwerk gehören.

36. Mobiler Knoten, der mit einem Mobilkommunikationsnetzwerk verbunden werden kann, wobei der mobile Knoten aufweist:
eine Empfangseinrichtung, die konfiguriert ist, von einem Leitweglenkungsnetzwerkelement zumindest einen von einem ersten Typ und einem zweiten Typ einer Adressinformation zu empfangen;
eine Einstelleinrichtung, die konfiguriert ist, einen Leitweg für eine Kommunikationsverbindung basierend auf dem zumindest einen von einem ersten Typ und einem zweiten Typ einer Adressinformation einzustellen;
eine Auswahleinrichtung zum Auswählen eines aus den ersten und zweiten Typen zum Einstellen des Leitwegs, wenn sowohl der erste Typ als auch der zweite Typ einer Adressinformation empfangen werden, wobei der erste Typ einer Adressinformation auf das Heimatnetzwerk des Leitweglenkungsnetzwerkelements bezogen ist und ein Präfix aufweist, das von einem in dem Heimatnetzwerk des Leitweglenkungsnetzwerkelements befindlichen Heimatagenten empfangen wird, und der zweite Typ einer Adressinformation auf ein von dem Heimatnetzwerk des Leitweglenkungsnetzwerkelements verschiedenes besuchtes Netzwerkelement bezogen ist und ein anderes Präfix aufweist, das von einem Router empfangen wird, der mit dem besuchten Netzwerk verbunden ist, wobei das Leitweglenkungsnetzwerkelement und der Router miteinander verbunden sind.

## Revendications

1. Procédé de définition d'une voie pour une connexion de communication d'une unité de communication dans un environnement de réseau mobile, le procédé comprenant les étapes consistant à :
connecter une unité de communication à un élément de réseau de routage ;
déterminer, dans l'élément de réseau de routage, si l'unité de communication appartient à un réseau domestique de l'élément de réseau de routage ;
sélectionner, si l'unité de communication appartient au réseau domestique de l'élément de réseau de routage, un premier type d'information d'adresse, ou sélectionner, si l'unité de communication n'appartient pas au réseau domestique de l'élément de réseau de routage, un deuxième type d'information d'adresse ;
envoyer le premier ou deuxième type d'information d'adresse de l'élément de réseau de routage à l'unité de communication ; et
utiliser le premier ou deuxième type d'information d'adresse reçu de l'élément de réseau de routage pour définir une voie pour l'unité de communication,
dans lequel
le premier type d'information d'adresse est associé au réseau domestique de l'élément de réseau de routage et il comprend un premier préfixe reçu d'un agent domestique situé dans le réseau domestique de l'élément de réseau de routage, et
le deuxième type d'information d'adresse est associé à un réseau visité différent du réseau domestique de l'élément de réseau de routage et il comprend un deuxième préfixe reçu d'un routeur connecté au réseau visité, dans lequel l'élément de réseau de routage et le routeur sont connectés l'un à l'autre.

2. Procédé selon la revendication 1, dans lequel l'étape de détermination comprend les étapes consistant à :
identifier l'information d'adresse de couche de liaison transmise de l'unité de communication à l'élément de réseau de routage lorsqu'une connexion de couche de liaison est établie, et
comparer l'information d'adresse de couche de liaison aux informations d'adresse de couche de liaison stockées des unités de communication connues comme appartenant au réseau domestique de l'élément de réseau de routage.

3. Procédé selon la revendication 1 ou 2, dans lequel l'étape de détermination comprend une étape consistant à :
exécuter une procédure d'authentification pour prouver que l'unité de communication appartient au réseau domestique de l'élément de réseau de routage.

4. Procédé selon l'une quelconque des revendications précédentes, dans lequel l'étape de détermination comprend les étapes consistant à :
recevoir un message de sollicitation de routeur de l'unité de communication comprenant un champ de données indiquant une information d'adresse de couche de liaison de source, et
comparer l'information d'adresse de couche de liaison de source aux informations d'adresse de couche de liaison stockées des unités de communication connues comme appartenant au réseau domestique de l'élément de réseau de routage.

5. Procédé selon l'une quelconque des revendications précédentes, dans lequel l'étape de détermination comprend les étapes consistant à :
recevoir un message de sollicitation de routeur de l'unité de communication comprenant un champ de données indiquant une information d'adresse d'agent domestique du réseau domestique de l'unité de communication,
comparer l'information d'adresse d'agent domestique de l'unité de communication aux autres informations d'adresse d'agent domestique de l'élément de réseau de routage.

6. Procédé selon l'une quelconque des revendications précédentes, dans lequel l'étape d'envoi comprend une étape consistant à envoyer un message d'annonce de routeur de l'élément de réseau de routage à l'unité de communication, le message d'annonce de routeur comprenant le premier ou deuxième type d'information d'adresse.

7. Procédé selon l'une quelconque des revendications précédentes, dans lequel l'étape d'envoi comprend une étape consistant à envoyer le deuxième type d'information d'adresse lorsque le premier type d'information d'adresse est sélectionné, et le premier type d'information d'adresse lorsque le deuxième type d'information d'adresse est sélectionné.

8. Procédé selon la revendication 7, comprenant en outre une étape consistant à sélectionner, dans l'unité de communication, l'un des premier et deuxième types d'information d'adresse reçus de l'élément de réseau de routage à utiliser à l'étape d'utilisation des information d'adresse.

9. Procédé selon l'une quelconque des revendications précédentes, dans lequel l'unité de communication et l'élément de réseau de routage sont des noeuds mobiles respectifs pouvant se déplacer dans un environnement de réseau mobile, et l'élément de réseau de routage comprend au moins l'un d'un routeur mobile et d'un routeur de sous-réseau multi-liaison.

10. Procédé selon l'une quelconque des revendications précédentes, dans lequel l'unité de communication comprend un autre élément de réseau de routage.

11. Procédé selon l'une quelconque des revendications précédentes, comprenant en outre l'étape consistant à utiliser un type de protocole Internet pour un environnement de réseau mobile.

12. Procédé selon l'une quelconque des revendications précédentes, comprenant en outre les étapes consistant à :
utiliser, pour une connexion de communication de l'unité de communication, une connexion bidirectionnelle établie entre l'élément de réseau de routage et le réseau domestique lorsque l'unité de communication et l'élément de réseau de routage appartiennent au réseau domestique, et
établir la connexion bidirectionnelle entre l'unité de communication et le réseau domestique lorsque l'unité de communication n'appartient pas au réseau domestique de l'élément de réseau de routage.

13. Système de communication utilisable dans un environnement de réseau mobile comprenant au moins un élément de réseau de routage et au moins une unité de communication, le système étant configuré pour définir une voie pour une connexion de communication d'une unité de communication dans l'environnement de réseau mobile, dans lequel l'élément de réseau de routage est configuré pour :
détecter que l'unité de communication se connecte à un élément de réseau de routage,
déterminer si l'unité de communication appartient à un réseau domestique de l'élément de réseau de routage,
sélectionner, si l'unité de communication appartient au réseau domestique de l'élément de réseau de routage, un premier type d'information d'adresse, ou sélectionner, si l'unité de communication n'appartient pas au réseau domestique de l'élément de réseau de routage, un deuxième type d'information d'adresse, et
envoyer le premier ou deuxième type d'information d'adresse à l'unité de communication,
dans lequel l'unité de communication est configurée pour
traiter le premier ou deuxième type d'information d'adresse reçu de l'élément de réseau de routage, et
utiliser l'information d'adresse pour définir une voie pour l'unité de communication,
dans lequel
le premier type d'information d'adresse est associé au réseau domestique de l'élément de réseau de routage et il comprend un premier préfixe reçu d'un agent domestique situé dans le réseau domestique de l'élément de réseau de routage, et
le deuxième type d'information d'adresse est associé à un réseau visité différent du réseau domestique de l'élément de réseau de routage et il comprend un autre préfixe reçu d'un routeur connecté au réseau visité, dans lequel l'élément de réseau de routage et le routeur sont connectés l'un à l'autre.

14. Système selon la revendication 13, dans lequel l'élément de réseau de routage détermine si l'unité de communication appartient au réseau domestique en :
identifiant l'information d'adresse de couche de liaison transmise de l'unité de communication à l'élément de réseau de routage lorsqu'une connexion de couche de liaison est établie, et
comparant l'information d'adresse de couche de liaison aux informations d'adresse de couche de liaison stockées des unités de communication connues comme appartenant au réseau domestique de l'élément de réseau.

15. Système selon la revendication 13 ou 14, dans lequel l'élément de réseau de routage détermine si l'unité de communication appartient au réseau domestique en :
exécutant une procédure d'authentification pour prouver que l'unité de communication appartient au réseau domestique de l'élément de réseau de routage.

16. Système selon l'une quelconque des revendications 13 à 15, dans lequel l'élément de réseau de routage détermine si l'unité de communication appartient au réseau domestique en :
recevant un message de sollicitation de routeur de l'unité de communication comprenant un champ de données indiquant une information d'adresse de couche de liaison de source, et
comparant l'information d'adresse de couche de liaison de source aux informations d'adresse de couche de liaison stockées des unités de communication connues comme appartenant au réseau domestique de l'élément de réseau de routage.

17. Système selon l'une quelconque des revendications 13 à 16, dans lequel l'élément de réseau de routage détermine si l'unité de communication appartient au réseau domestique en :
recevant un message de sollicitation de routeur de l'unité de communication comprenant un champ de données indiquant une information d'adresse d'agent domestique du réseau domestique de l'unité de communication,
comparant l'information d'adresse d'agent domestique de l'unité de communication aux autres informations d'adresse d'agent domestique de l'élément de réseau de routage.

18. Système selon l'une quelconque des revendications 13 à 17, dans lequel l'élément de réseau de routage est configuré pour envoyer un message d'annonce de routeur à l'unité de communication, le message d'annonce de routeur comprenant le premier ou deuxième type d'information d'adresse.

19. Système selon l'une quelconque des revendications 13 à 18, dans lequel l'élément de réseau de routage est configuré pour envoyer le deuxième type d'information d'adresse lorsque le premier type d'information d'adresse est sélectionné, et le premier type d'information d'adresse lorsque le deuxième type d'information d'adresse est sélectionné.

20. Système selon la revendication 19, dans lequel l'unité de communication est configurée pour sélectionner l'un des premier et deuxième types d'information d'adresse reçus de l'élément de réseau de routage et utiliser l'un des premier et deuxième types d'information d'adresse pour définir la voie pour l'unité de communication.

21. Système selon l'une quelconque des revendications 13 à 20, dans lequel l'unité de communication et l'élément de réseau de routage sont des noeuds mobiles respectifs pouvant se déplacer dans l'environnement de réseau mobile, dans lequel l'élément de réseau de routage comprend au moins l'un d'un routeur mobile et d'un routeur de sous-réseau multi-liaison.

22. Système selon l'une quelconque des revendications 13 à 21, dans lequel l'unité de communication comprend un autre élément de réseau de routage.

23. Système selon l'une quelconque des revendications 13 à 22, dans lequel l'environnement de réseau mobile utilise un type de protocole Internet.

24. Système selon l'une quelconque des revendications 13 à 23, dans lequel le système est configuré pour :
utiliser, pour une connexion de communication de l'unité de communication, une connexion bidirectionnelle établie entre l'élément de réseau de routage et le réseau domestique lorsque l'unité de communication et l'élément de réseau de routage appartiennent au réseau domestique, et
établir la connexion bidirectionnelle entre l'unité de communication et le réseau domestique lorsque l'unité de communication n'appartient pas au réseau domestique de l'élément de réseau de routage.

25. Dispositif de routage utilisable dans un environnement de réseau mobile et employé dans une définition d'une voie pour une connexion de communication d'une unité de communication dans l'environnement de réseau mobile, dans lequel le dispositif de routage comprend :
un moyen de détection pour détecter qu'une unité de communication se connecte au dispositif de routage,
un moyen de détermination pour déterminer si l'unité de communication appartient au réseau domestique du dispositif de routage,
un moyen de sélection pour sélectionner un premier type d'information d'adresse, lorsque l'unité de communication appartient au réseau domestique du dispositif de routage, ou pour sélectionner un deuxième type d'information d'adresse, lorsque l'unité de communication n'appartient pas au réseau domestique du dispositif de routage, et
un moyen d'envoi pour envoyer le premier ou deuxième type d'information d'adresse à l'unité de communication, dans lequel
le premier type d'information d'adresse est associé au réseau domestique du dispositif de routage et comprend un préfixe reçu d'un agent domestique situé dans le réseau domestique du dispositif de routage, et
le deuxième type d'information d'adresse est associé à un réseau visité différent du réseau domestique du dispositif de routage et comprend un autre préfixe reçu d'un routeur connecté au réseau visité dans lequel le dispositif de routage et le routeur sont connectés l'un à l'autre.

26. Dispositif de routage selon la revendication 25, dans lequel le moyen de détermination comprend :
un moyen d'identification pour identifier une information d'adresse de couche de liaison transmise de l'unité de communication au dispositif de routage lorsqu'une connexion de couche de liaison est établie, et
un moyen de comparaison pour comparer l'information d'adresse de couche de liaison aux informations d'adresse de couche de liaison stockées des unités de communication connues comme appartenant au réseau domestique du dispositif de routage.

27. Dispositif de routage selon la revendication 25 ou 26, dans lequel le moyen de détermination comprend détermine si l'unité de communication appartient au réseau domestique en exécutant une procédure d'authentification pour prouver que l'unité de communication appartient au réseau domestique du dispositif de routage.

28. Dispositif de routage selon l'une quelconque des revendications 25 à 27, dans lequel le moyen de détermination comprend :
un moyen de traitement pour traiter un message de sollicitation de routeur reçu de l'unité de communication, le message de sollicitation de routeur comprenant un champ de données indiquant une information d'adresse de couche de liaison de source, et
un moyen de comparaison pour comparer l'information d'adresse de couche de liaison de source aux informations d'adresse de couche de liaison stockées des unités de communication connues comme appartenant au réseau domestique du dispositif de routage.

29. Dispositif de routage selon l'une quelconque des revendications 25 à 28, dans lequel le moyen de détermination comprend :
un moyen de traitement pour traiter un message de sollicitation de routeur de l'unité de communication, le message de sollicitation de routeur comprenant un champ de données indiquant une information d'adresse d'agent domestique du réseau domestique de l'unité de communication, et
un moyen de comparaison pour comparer l'information d'adresse d'agent domestique de l'unité de communication aux autres informations d'adresse d'agent domestique du dispositif de routage.

30. Dispositif de routage selon l'une quelconque des revendications 25 à 29, dans lequel le dispositif de routage est configuré pour envoyer un message d'annonce de routeur à l'unité de communication, le message d'annonce de routeur comprenant le premier ou deuxième type d'information d'adresse.

31. Dispositif de routage selon l'une quelconque des revendications 25 à 30, dans lequel le dispositif de routage est configuré pour envoyer le deuxième type d'information d'adresse lorsque le premier type d'information d'adresse est sélectionné, et le premier type d'information d'adresse lorsque le deuxième type d'information d'adresse est sélectionné.

32. Dispositif de routage selon l'une quelconque des revendications 25 à 31, dans lequel l'unité de communication et le dispositif de routage sont des noeuds mobiles respectifs pouvant se déplacer dans un environnement de réseau mobile, dans lequel le dispositif de routage comprend au moins l'un d'un routeur mobile et d'un routeur de sous-réseau multi-liaison.

33. Dispositif de routage selon l'une quelconque des revendications 25 à 32, dans lequel l'unité de communication comprend un autre routeur.

34. Dispositif de routage selon l'une quelconque des revendications 25 à 33, dans lequel l'environnement de réseau mobile utilise un type de protocole Internet.

35. Dispositif de routage selon l'une quelconque des revendications 25 à 34, dans lequel :
une connexion bidirectionnelle établie entre le dispositif de routage et le réseau domestique est utilisée pour une connexion de communication de l'unité de communication lorsque l'unité de communication et le dispositif de routage appartiennent au réseau domestique.

36. Noeud mobile pouvant être connecté à un réseau de communication mobile, le noeud mobile comprenant :
un moyen de réception configuré pour recevoir, d'un élément de réseau de routage, au moins l'un d'un premier type et d'un deuxième type d'information d'adresse ;
un moyen de définition configuré pour définir une voie pour une connexion de communication sur la base de l'au moins un d'un premier type et d'un deuxième type d'information d'adresse ;
un moyen de sélection pour sélectionner, lorsque le premier type et le deuxième type d'information d'adresse sont reçus, l'un des premier et deuxième types pour définir la voie, dans lequel
le premier type d'information d'adresse est associé au réseau domestique de l'élément de réseau de routage et il comprend un préfixe reçu d'un agent domestique situé dans le réseau domestique de l'élément de réseau de routage, et le deuxième type d'information d'adresse est associé à un réseau visité différent du réseau domestique de l'élément de réseau de routage et il comprend un autre préfixe reçu d'un routeur connecté au réseau visité, dans lequel l'élément de réseau de routage et le routeur sont connectés l'un à l'autre.
